# EUROPEAN PATENT SPECIFICATION

(11) **EP 0 511 746 B1**
(45) Date of publication and mention of the grant of the patent: **27.12.1995**
(21) Application number: 92302988.8
(22) Date of filing: 03.04.1992
(51) Int. Cl.: B23K 26/00

(54) **Method of making articles by laser beam welding**
Verfahren zur Herstellung von Artikeln mittels Laserstrahlschweissen
Méthode de fabrication d'articles par soudage au faisceau laser

(30) Priority: 30.04.1991 JP 124569/91
(43) Date of publication of application: 04.11.1992
(73) Proprietor: TOYO SEIKAN KAISHA LIMITED, Tokyo (JP)
(72) Inventor: Matsuno, Kenji, Yokohama Park Town H705, Yokohama-city, Kanagawa Prefecture (JP)
(74) Representative: Charlton, Peter John

(56) References cited:
- EP-A- 0 421 091
- WO-A-88/08353
- US-A- 4 471 204
- PATENT ABSTRACTS OF JAPAN vol. 14, no. 501 (M-1043)2 November 1990 & JP-A-22 07 917 (Nippon Steel Corp,) 17 August 1990

## Description

The present invention relates to a method of making articles such as a welded can body to be used for preserved food or beverage cans, an elongated tubular metallic bodies such as a metallic pipe, or an easy open can end jointed with an opening tab, by laser beam welding.

Recently, laser beam has been widely employed for welding a metal sheet, since it can concentrate its energy to a very small spot. Welding a metal sheet by using the laser beam is usually carried out by butt fielding or overlap welding.

The butt welding poses the following problems; when applied to manufacture of a can body, it is very difficult to secure the accuracy of a butt portion necessary for welding a metal sheet having a thickness less than 0.15 mm, and pinholes are apt to occur in the weld. It is not suited to a high speed welding, since with a welding velocity in excess of 30 m/min, an uneven weld called humping bead is apt to be caused.

The conventional overlap laser welding of a metal sheet is usually conducted in such a manner that a laser beam is directed perpendicularly to an overlap portion consisting of two sheet portions in contact with each other along all the area thereof, and melts the portion of the sheet opposite to the laser beam source and then the metal in the vicinity of the interface of the overlap portion. The welding of this type has the disadvantages that the welding efficiency is poor, since metal of the amount more than that required for welding shall be fused, and hence a laser beam source having a considerably large output is needed so as to enhance the welding velocity. Furthermore, fused marks remain on the sheet portion which has been melted, and present poor appearance.

WO-A-88/08353 discloses a laser beam welding method according to which two workpieces are brought into partial contact by overlapping edge portions, whereby a wedge-shaped portion is formed by the non-contacting edges of the workpieces. A laser beam, which is essentially parallel to the weld line to be formed, is directed to enter the wedge-shaped portion.

The present invention seeks to provide a method of welding articles with the laser beam wherein even if the metal sheet to be welded is relatively thin, it is possible to form a weld of acceptable quality with a high velocity and with a relatively high welding efficiency, that is, by using a laser of a relatively small energy.

The present invention provides a laser beam welding method wherein an overlap portion is formed by overlapping a first edge portion over a second edge portion such that a gap portion is formed therebetween, and a laser beam is directed to enter the gap portion and form a weld; wherein the gap portion extends in the longitudinal direction of the overlap portion and is of tiny clearance, the axis of the laser beam is inclined by 10 to 60 degrees with respect to a surface portion of the second edge portion in the overlap portion, the first and second edge portions defining the gap portion are retained in position throughout formation of the weld, and the laser beam is directed to be focused inside the overlap portion, onto a surface portion of the second edge portion situated in the vicinity of the entrance to the gap portion, and onto a cut edge of the first edge portion, whereby the laser beam enters the gap portion, and melts the metal around the gap portion.

Where the first edge portion and the second edge portion are the opposed edge portions of a metallic tubular body preform, a welded tubular body such as a welded can body may be manufactured. In this case, it is preferable to mash the weld after the weld has solidified, until the step portions of the weld nearly disappear and the weld may be substantially flat.

According to another aspect of the invention there is provided a laser beam welding method wherein an overlap portion is formed by overlapping a first edge portion of a first member over a second edge portion of a second member such that an aperture is formed therebetween, and a laser beam is directed to enter the aperture and form a weld; wherein the first edge portion is formed with a cant plane or a concave face extending towards a cut edge thereof, the overlap portion has a contact portion, the aperture is tiny and is open from the contact portion towards the cut edge and extends in the longitudinal direction of the overlap portion, the axis of the laser beam is inclined by 10 to 60 degrees with respect to a surface portion of the second member in the overlap portion, and while slight pressure is applied to the contact portion, the laser beam is directed to be focused to the entrance, or to the vicinity thereof, of the aperture, onto a surface portion of the second edge portion situated in the vicinity of the entrance to the aperture, and onto a cut edge of the first edge portion, whereby the laser beam enters in the aperture, and melts the metal around the aperture.

In this case also, where the first member and the second member are a first edge portion and a second edge portion of the same metal blank, respectively, and the overlap portion is formed by the opposed edge portions of a tubular body preform formed by rolling up the blank, a welded tubular body may be manufactured.

According to a further aspect of the invention there is provided a laser beam welding method wherein an overlap portion is formed by overlapping a first edge portion of a first member over a second edge portion of a second edge member such that an aperture is formed therebetween, and a laser beam is directed to enter the aperture and form a weld, wherein the overlap portion is formed by bringing the first edge portion, which is inclined with respect to the second edge portion, into contact with a corner of the cut edge of the second portion such that the overlap portion has a linear contact portion and a tiny aperture open from the linear contact portion towards the cut edge of the first edge portion, the axis of the laser beam is inclined by 10 to 60 degrees with respect to a surface portion of the second member in the overlap portion, the first and second edge portions defining the aperture are retained in position throughout formation of the weld, and the laser beam is directed onto a surface portion of the second edge portion situated in the vicinity of the entrance to the aperture, and onto a cut edge of the first edge portion, whereby the laser beam enters the aperture, and melts the metal around the aperture.

In this case also, where the first member and the second member are a first edge portion and a second edge portion of the same metal blank, respectively, and the overlap portion is formed by the opposed edge portions of a tubular body perform formed by rolling up the blank, a welded tubular body may be manufactured.

When the laser beam is directed with an appropriate angle to the surface portion of the second edge portion at the entrance and its vicinity of the gap portion of a tiny clearance in the overlap portion and at least part of the cut edge of the first edge portion, part of the laser beam will melt the metal of the surface portion at the vicinity of the entrance of the gap portion, and simultaneously fuse the metal at the upper and lower surfaces of the gap portion while it renders multiple reflections in the gap portion, i.e. reflects repeatedly between the upper and lower surfaces of the gap portion. Part of the laser beam which has been directed to the cut edge of the first edge portion will melt the cut edge and its vicinity.

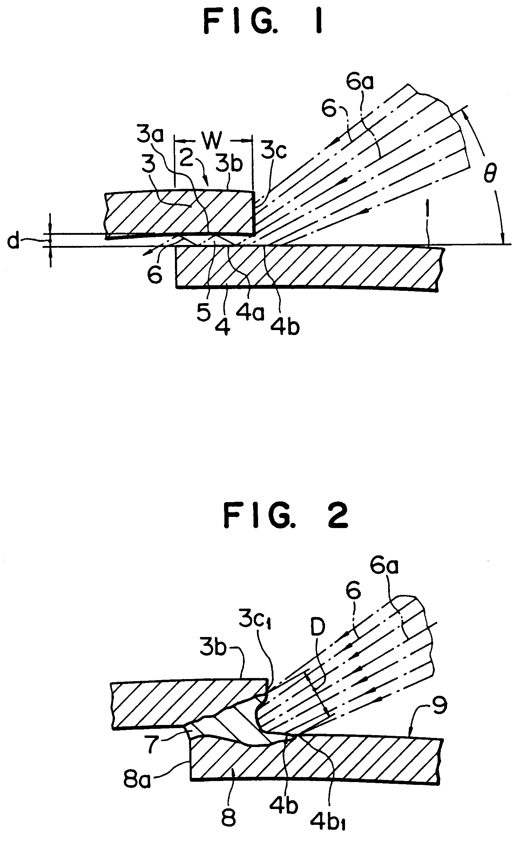

Immediately after passed the laser beam, the molten metals at the cut edge and the surface portion at the vicinity of the entrance of the gap portion will flow, and mainly with surface tension be incorporated with the molten metals at the upper and lower surfaces of the gap portion having a tiny clearance. As a result, the molten metal will fill the gap portion, and after solidified, a weld will be formed (refer to Fig. 2).

Since the clearance, i.e. the gap height of the gap portion is tiny, the multiple reflections will be rendered effectively, and hence a high velocity welding may be possible with a laser beam of a comparatively small energy, and the gap portion may be filled very rapidly with the molten metal.

The angle of the axis of the laser beam with respect to the surface of the second edge portion in the overlap position is not less than 10 degrees. If the angle is less than 10 degrees, then the amount of the molten metal at the surface portion at the vicinity of the entrance of the gap portion is decreased, and hence the gap portion may not be filled fully at a high velocity welding. Further, since the length in contact with the laser beam along the surface outside the entrance of the gap portion is increased, the surface area deteriorated with the laser beam may be enlarged.

The angle of the axis of the laser beam with respect to the surface of the second edge portion in the overlap portion is not in excess of 60 degrees. If the angle is in excess of 60 degrees, then the amount of the laser beam coming into the gap portion is decreased, and hence the metal at the upper and lower surfaces of the gap portion will melt slowly, resulting in the difficulty of a high velocity welding. Further, since the depth of the fused layer at the vicinity of the entrance of the gap portion is increased, the properties of the back surface at the above vicinity may be impaired, e.g. a plated film on the back surface may be damaged.

Since it is not necessary to butt the opposite edges to each other, it is possible to form a tubular metallic body or the like having a weld of satisfactory performances even from a relatively thin metallic sheet such as of the thickness less than 0.15 mm.

Where the weld is mashed after solidified, until the step portions will substantially disappear, a substantially flat weld may be formed without extruding nor splashing the molten metal.

Where while the contact portion of the overlap portion having the contact portion and the tiny aperture open from the contact portion toward the cut edge is pressed slightly, the laser beam with an appropriate angle is directed to the surface portion of the second member at the entrance and its vicinity of the aperture and at least part of the cut edge of the first member, also the laser beam will melt the metal at the surface portion of the second member at the vicinity of the entrance of the aperture, and render multiple reflections in the tiny aperture having extremely small height and depth, resulting in melting effectively the metals on the upper and lower surfaces of the aperture. Simultaneously, the laser beam which was directed to the cut edge of the first member will fuse the vicinity of the cut edge to form a fused joint, i.e. a weld.

Part of the contact portion at the vicinity of the aperture will form part of the fused joint. The solid portion of the contact portion which has not fused and been heated to a temperature close to the melting point of the metal due to heat conduction, may be pressure welded to form part of the weld, since it is pressed slightly during welding. Accordingly, the energy efficiency of the laser welding is high.

The contact portion serves to form a tiny aperture having a precise configuration. It is desirable to set the force pressing the contact portion to a slight value in the range that the shape of the aperture is not changed by handling such as feeding prior to the welding, and the molten metal will not extrude nor splash during welding.

The method according to the invention, as already described, wherein while the linear contact portion of the overlap portion having the linear contact portion and the tiny aperture open from the linear contact portion toward the cut edge is pressed slightly, a laser beam with an appropriate angle is directed to the surface portion of the second member at the entrance and its vicinity of the aperture and at least part of the cut edge of the first member, also presents almost the same advantages as aforementioned, except that the pressure welded portion is not formed, since the contact portion is linear.

The invention will be better understood from the following description of the particular embodiments of the invention. The description refers to the accompanying drawings.
Fig. 1 is a vertical sectional view indicating a state that a laser beam is directed to the overlap portion having the gap portion of a first modification according to the invention;
Fig. 2 is a vertical sectional view indicating a state after the overlap portion shown in Fig. 1 has been formed into a weld by directing a laser beam;
Fig. 3 is a vertical sectional view indicating a state after the weld shown in Fig. 2 has been mashed;
Fig. 4 is an explanatory, schematic front view of an apparatus for carrying out the invention directing a laser beam to the overlap portion shown in Fig. 1;
Fig. 5 is a vertical sectional view taken along line V-V in Fig. 4;
Fig. 6 is a vertical sectional view taken along line VI-VI in Fig.4;
Fig. 7 is a vertical sectional view indicating a state where the overlap portion having the gap portion of a second modification is held with a support means according to the invention ;
Fig. 8 is a vertical sectional view indicating a state where the overlap portion having the gap portion of a third modification is held with a support means for carrying out the invention;
Fig. 9 is a fragmentary vertical sectional view taken along line IX-IX in Fig. 8;
Fig. 10 is a vertical sectional view corresponding to Fig. 9 of the overlap portion having a gap portion of a fourth modification according to the invention;
Fig. 11 is a fragmentary perspective view indicating the state that a metallic tubular body is formed by laser welding continuously the overlap portion of the type shown in Fig. 10 according to the invention;
Fig. 12 is a fragmentary perspective view indicating the state that a metallic pipe is formed by laser welding continuously the overlap portion of the type shown in Fig. 1 according to the invention;
Fig. 13 is a vertical sectional view indicating a state that a laser beam is directed to the overlap portion having the contact portion and the aperture of a first modification according to the invention;
Fig. 14 is a vertical sectional view indicating a state that a laser beam is directed to the overlap portion having the contact portion and the aperture of a second modification according to the invention;
Fig. 15 is a vertical sectional view indicating a state that a laser beam is directed to the overlap portion having the contact portion and the aperture of a third modification according to the invention;
Fig. 16 is a vertical sectional view indicating a state that a laser beam is directed to the overlap portion having the linear contact portion and the aperture according to the invention;
Fig. 17 is an explanatory, schematic front view of an apparatus for carrying out the invention directing a laser beam to the overlap portion which is of the type shown in Fig. 13, Fig. 14 or Fig. 15;
Fig. 18 is a vertical sectional view taken along line XVIII-XVIII in Fig. 17;
Fig. 19 is a fragmentary perspective view for indicating a method of making a metallic tubular body by directing continuously a laser beam to the overlap portion shown in Fig. 16;
Fig. 20 is a vertical sectional view taken along line XX-XX in Fig. 19;
Fig. 21 is a vertical sectional view taken along line XXI-XXI in Fig. 19;
Fig. 22 is a plan view of an easy open can end formed by welding an opening tab according to the invention;
Fig. 23 is a vertical sectional view including a portion taken along line XXIII-XXIII in Fig. 22 which view shows a state that a laser beam is directed to make the can end indicated in Fig. 22;
Fig. 24 is an enlarged view of the portion E in Fig. 23.

Referring to Fig. 1, the overlap portion 2 of a metallic tubular body preform 1 formed from a metal sheet blank (not shown) has a gap portion 5 wherein the lower surface 3a of an outer edge portion 3 and the upper surface 4a of an inner edge portion 4 are parallel with each other. The metal sheet preferably may be about 0.05 to 0.4 mm thick. It is preferable that the width w of the overlap portion 2, i.e. of the gap portion 5 is in excess of the thickness of the metal sheet and less than 0.5 mm.

As the metal sheet, a surface treated steel sheet such as black plate, tinfree steel, tinplate and a thinly nickel plated steel sheet, and an aluminum alloy sheet or the like may be advantageously employed.

A laser beam 6 whose axis 6a is inclined by an angle ϑ of 10 to 60 degrees, preferably 15 to 45 degrees with respect to the upper surface 4a of the inner edge portion 4 in the gap portion 5 is directed to the surface portion 4b of the inner edge portion 4 at the entrance and its vicinity of the gap portion 5 and at least part of the cut edge 3c of the outer edge portion 3, to be focussed inside the overlap portion 2. The laser may be a CO₂ laser, a YAG laser and the like.

The diameter D (refer to Fig. 2) of the focal plane of the laser beam 6 is usually about 0.1 to 0.5 mm depending on the type of the laser used. In Fig. 2 the laser beam 6 is directed to the portion between the position 3c₁ on the cut edge 3c and the position 4b₁ on the surface portion 4b. When the laser beam 6 having a focal plane of a relatively large diameter is employed, the laser beam 6 may be directed to the surface portion 4b, the cut edge 3c and a portion close to the cut edge 3c on the upper surface 3b of the outer edge portion 3.

The height d of the gap portion 5, i.e. clearance shall be set to be at least the wave length of the laser so that the beam 6 may come into the gap portion 5, and be not in excess of a value that the gap portion 5 may be filled sufficiently with a molten metal created around the gap portion 5. The clearance usually may be 50 % or less, more preferably 30 % or less of the diameter D.

When the CO₂ laser is employed, it is preferable that the height d is 0.01 to 0.06 mm, more preferably 0.02 to 0.05 mm. The optimum value of the clearance d is dependent on the type of the metal sheet, sheet thickness, welding velocity, the wave length, the output and the focal plane diameter D of the laser, the distribution of energy on the focal plane of the laser beam or the like. Accordingly, the clearance d of the gap portion 5 is determined experimentally based on the above-described factors.

When the laser beam 6 is irradiated under the aforementioned conditions, as shown in Figs. 1 and 2, part of the laser beam 6 melts the surface portion 4b at the entrance and its vicinity of the gap portion 5, and simultaneously enters the gap portion 5 and renders multiple reflections in the gap portion 5, resulting in melting the upper and lower surfaces of the gap portion 5.

The laser beam 6 directed to the cut edge 3c melts the cut edge 3c and its vicinity. The molten metals created at the surface portion 4b and the cut edge 3c are integrated with the molten metal created at the upper and lower surfaces of the gap portion 5, and fills the gap portion 5 to form a fused portion 7. After solidified, the fused portion 7 becomes a weld 8, and a welded tubular body 9 such as a welded can body is made.

The welded tubular body 9 may be usable as it is, depending on its application. However, it is not suited to a can body for a preserved food or beverage can, since the weld 8 has pronounced step portions 8a which will hinder the uniform coating with a mending lacquer and the crimping of the ends of the can.

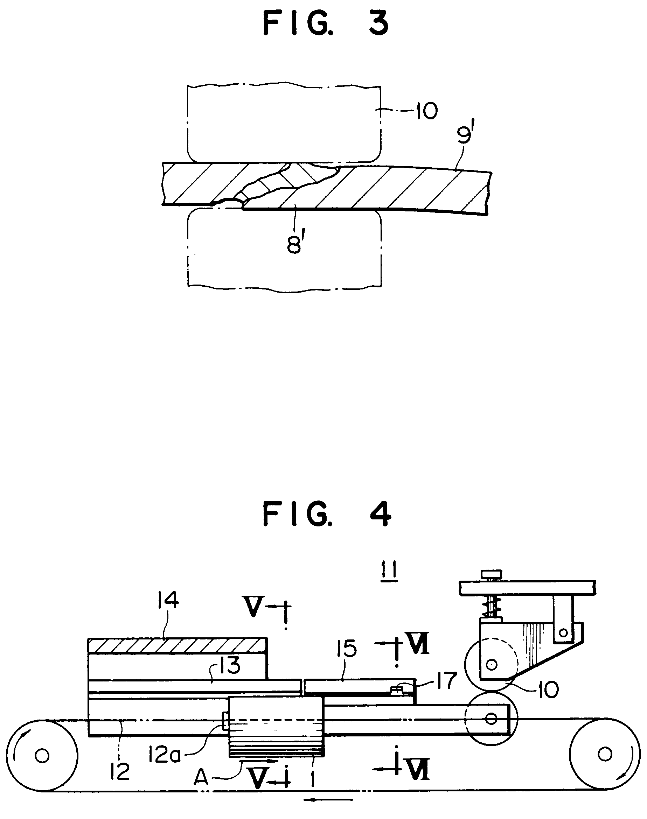

Accordingly, it is preferable to mash the weld 8 with a proper means such as rolls 10, as indicated in Fig. 3, and form the welded tubular body 9 into a welded tubular body 9' such as a can body having a substantially flat weld 8' without step portions 8a. Since the width w of the overlap portion 2, i.e. of the weld 8 is extremely small, the weld 8 can be made substantially flat with a relatively small force.

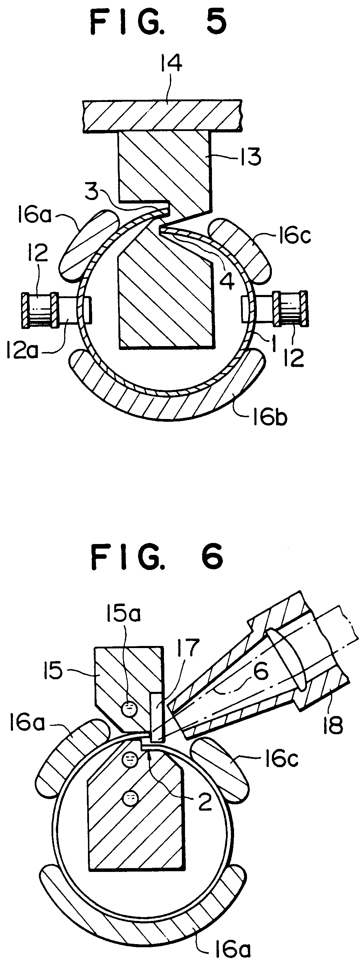

The welded can body 9' may be manufactured continuously, for example, by means of an apparatus 11 such as indicated in Figs.4, 5 and 6. The apparatus 11 is provided with a pair of endless chain conveyors 12 for conveying the metallic tubular body preform 1 in the direction shown by arrow A by pushing the preform 1 with a pair of fingers 12a, an edge guide bar 13 having a generally Z-shaped section for forming the overlap portion 2 by allowing the outer edge portion 3 and the inner edge portion 4 to come close to each other continuously while traveling, in cooperation with pushing bars 16a, 16b and 16c (refer to Fig.5; not shown in Fig.4), a support means 14 for the Z-shaped bar 13, and a retainer 15 for adjusting and retaining the gap portion 5 of the overlap portion 2 to attain the predetermined width w and clearance d. The retainer is formed with a cooling water circulating hole 15a.

A beam hole 17 through which the laser beam 6 passes is provided at the vicinity of the downstream end of the retainer 15. A laser beam gun 18 is provided opposite to the beam hole 17 such that the laser beam 6 may be directed to a predetermined position of the overlap portion 2 with a predetermined angle. A pair of mashing rolls 10 are equipped downstream the retainer 15.

While the tubular body preform 1 is conveyed at a high velocity by means of the chain conveyors 12 in the direction shown by arrow A, the overlap portion 2 having the gap portion 5 is formed by means of the Z-shaped edge guide bar 13 and the retainer 15. While traveling opposite to the beam hole 17, the overlap portion 2 is directed the laser beam 6 with an angle ϑ (refer to Figs. 1 and 6), and formed into a fused portion 7 (refer to Fig. 2).

The fused portion 7 is solidified before it will reach the mashing rolls 10, to form the weld 8. The weld 8 is mashed with the rolls 10 and formed into the substantially flat weld 8' having no step portions 8a, and thus the welded can body 9' is manufactured.

A practical example in this case will be described hereafter. The tubular body perform 1 having an inner diameter of 52.5 mm was formed from a tinfree steel blank 0.12 mm thick. The overlap portion 2 having the gap portion 5 in which the clearance d is 0.04 mm and the width w is 0.2 mm was formed, while the preform 1 is traveling at the velocity of 50 m/min.

A CO₂ laser having the output of 1.2 kw and the focal length of 95.3 mm was focussed to the overlap portion 2 with the angle ϑ of 25 degrees to form the weld 8. The weld 8 was mashed with a force of 40 kgf by means of a pair of rolls 10 having a diameter of 40 mm, and the welded can body 9' having no step portions 8a was manufactured. The weld 8' extends along all the area of the gap portion 5, as shown in Fig. 3, and had an acceptable welding strength.

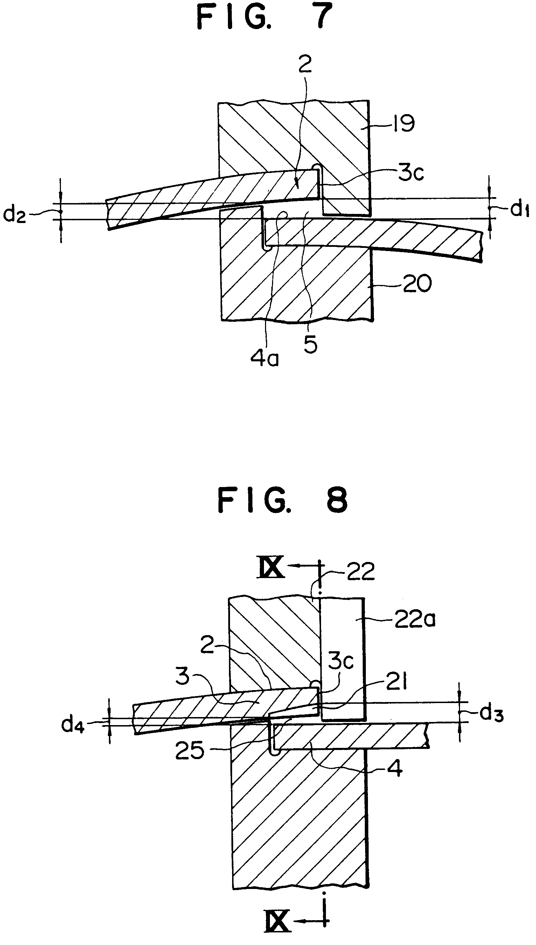

The clearance of the gap portion 5 of the overlap portion 2 may be larger toward the cut edge 3c, i.e. toward the entrance of the gap portion 5, as indicated in Fig. 7, wherein reference numerals 19 and 20 indicate retainers.

In this case it is desirable that the average clearance (half of the sum of the maximum value d₁ and the minimum value d₂) is set substantially equal to the aforementioned optimum value of the clearance d of the gap portion 5 wherein the clearance is constant widthwise as shown in Fig. 1.

The overlap portion 2 indicated in Fig. 7 having the average clearance set as above-described is advantageous in that the laser beam 6 may come into the gap portion 5 more readily since the entrance height d₁ is larger than that of the gap portion having the optimum clearance of the type shown in Fig. 1, and the gap portion may be sufficiently filled with the molten metal.

It is preferable that the entrance height d₁ is not excess of 80 % of the diameter D of the focal plane of the laser beam to be directed. In this case also the upper surface 4a is the reference plane of the directing angle ϑ of the laser beam 6.

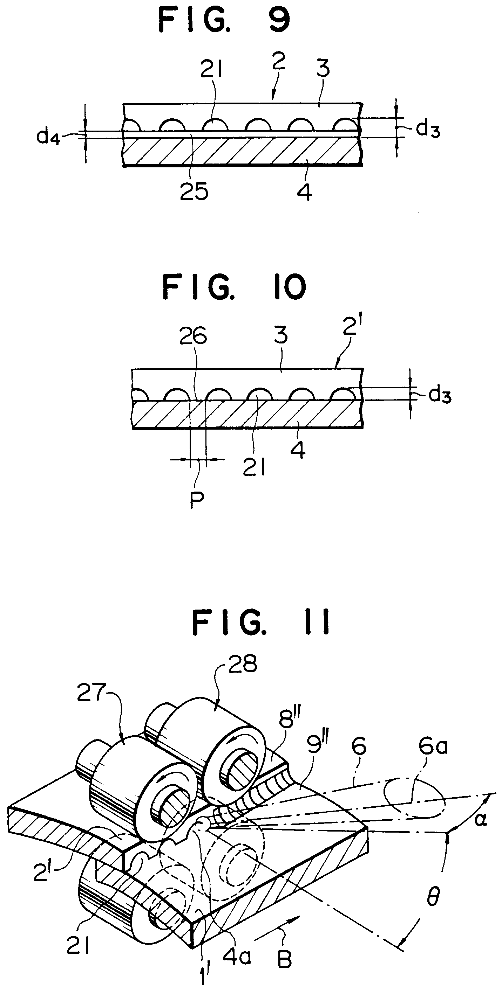

The gap portion of the overlap portion 2 may of the type that the gap height d is different repeatedly in the longitudinal direction, as shown by the gap portion 25 in Figs. 8 and 9. The outer edge portion 3 has the inner surface which has been formed with a plurality of concave portions 21 in a wave form with a knurling tool before forming the overlap portion 2.

The concave portion 21 may be of a semicylindrical configuration (not shown), or of a semiconical configuration (not shown), or of a truncated semiconical configuration as indicated in Fig. 8. In Fig. 8 reference numerals 22 and 22a illustrate a retainer and a beam hole through which the laser beam 6 passes, respectively.

The optimum value of the height of the gap portion having the concave portion 21 of the semicylindrical configuration is determined experimentally in the similar manner as in the case of the optimum clearance of the gap portion 5 shown in Fig. 1. It is desirable that the average height (half of the sum of the entrance height d₃ and the bottom height d₄) of the gap portion 25 indicated in Figs. 8 and 9 is set substantially equal to the above-described optimum height of the gap portion having the semicylindrical configuration.

The overlap portion 25 indicated in Figs. 8 and 9 having the gap portion 25 of the average height set as above-described is advantageous in that the laser beam 6 may come into the gap portion 25 more readily since the entrance height d₃ is larger than that of the gap portion having the concave portion of the semicylindrical configuration and the optimum height, and the gap portion may be sufficiently filled with the molten metal. In this case also, it is preferable that the entrance height d₃ is not excess of 50 % of the diameter D of the focal plane.

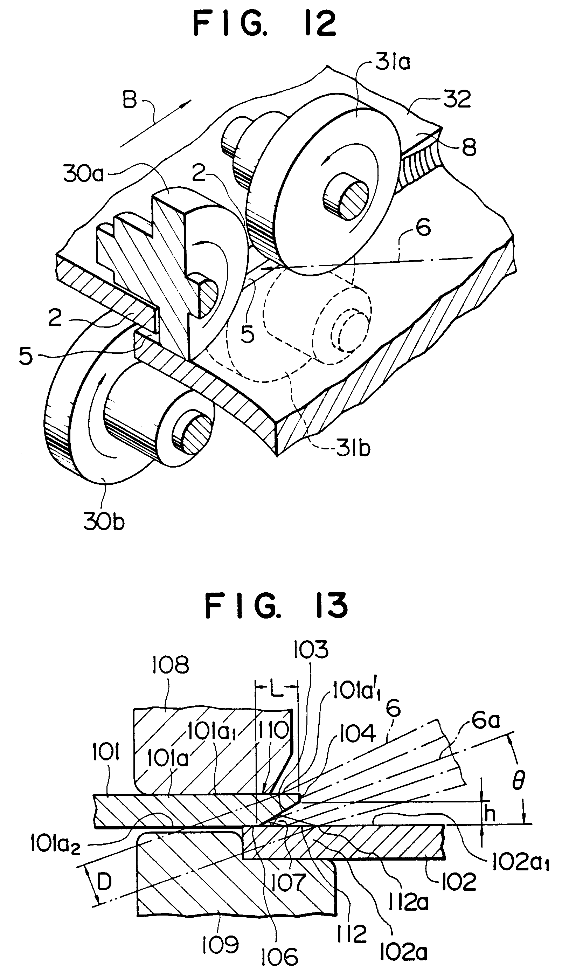

The gap portions 25 may be of the type that the lower surface of the outer edge portion 3 and the upper surface of the inner edge portion 4 are in contact with each other locally and repeatedly and form an overlap portion 2', as shown in Fig. 10.

In this case, it is preferable that the maximum gap height d₃ is not in excess of 80 % of the diameter D, and 0.1 mm or less. The length P of the contact portion 26 in the longitudinal direction may be preferably not in excess of the diameter D.

Fig. 11 indicates a method of manufacturing a metallic can body 9'' wherein while a metallic tubular body preform 1' formed with the overlap portion 2' shown in Fig. 10 is conveyed in the direction shown by arrow B, and the overlap portion 2' is pressed slightly with two pairs of rolls 27 and 28, the overlap portion 2' is directed with the laser beam 6 at a point between the rolls 27 and 28 to form a weld 8''. The axis 6a of the laser beam 6 is inclined by an angle α with respect to the plane perpendicular to the traveling direction B and by an angle ϑ with respect to the reference plane 4a.

The above method is advantageous in that an exactly controlled clearance consisting of the concave portions 21 can be obtained by pressing slightly the overlap portion 2' and the weld 8'' with the rolls 27 and 28, and the contact portions 26 may be pressure welded even if the contact portions 26 are not fused.

In this case also it is not preferable to press the overlap portion 2' excessively to the extent that the clearance may be extremely decreased, or to press the weld 8'' to the extent that the weld 8'' becomes extremely thin and the molten metal extrudes or splashes.

Similar concave portions (not shown) may be formed also along the upper surface of the inner edge portion 4. And similar concave portions (not shown) may be formed along only the upper surface of the inner edge portion 4. In the latter case the reference plane of the angle ϑ of the laser beam axis 6a is a flat portions 26 (refer to Fig. 10) in the upper surface of the inner edge portion 4.

Fig. 12 illustrates a method of making a metallic pipe 32. A metal strip rolled up by means of a rolling unit not shown arranged at the left of the drawing is conveyed in the direction shown by arrow B, while formed with the overlap portion 2 such as shown in Fig.1 having the gap portion 5 of the preset clearance height d and width w by means of a pair of holding rolls 30a, 30b and a pair of holding rolls 31a, 31b having the same structure as the rolls 30a, 30b.

The overlap portion 2 is directed with the laser beam 6 having a preset angle ϑ in the same manner as shown in Fig.1 at a point between the holding rolls 30a, 30b and the holding rolls 31a, 31b, and formed into the weld 8 of the pipe 32. The weld 8 may be mashed to be substantially flat by means of mashing rolls not shown, if necessary.

Referring to Fig. 13 reference numerals 101 and 102 indicate a first member and a second member, respectively. Where a welded can body is formed, the first member 101 and the second member 102 are opposite edge portions of the same metal blank. On the edge portion 101a of the first member 101 is formed a cant plane 103 extending from the lower surface 101a₂ to the cut edge 104 .

An overlap portion 110 having a contact portion 106 and an aperture 107 with a V-like section is formed by bringing the edge of the upper surface 102a₁ of the edge portion 102a of the second member 102 into contact with the portion close to the cant plane 103 of the lower surface 101a₂ of the first member 101, under a slight pressure of the extent that the overlap portion 110 is not mashed during welding, with an upper pressing member 108 and a lower pressing member 109.

The laser beam 6 whose axis 6a is inclined by an angle ϑ with respect to the portion of the surface 102a₁ in the aperture 107 is directed to the portion 112 of the surface portion 102a₁ at the entrance and its vicinity of the aperture 107 and at least part of the cut edge 104 to be focussed to the entrance or its vicinity of the aperture 107. The angle ϑ may be 10 to 60 degrees, preferably 15 to 45 degrees. In Fig. 13 the laser beam 6 is directed to the portion between the vicinity 101a'₁ of the cut edge 104 on the upper surface 101a₁ and the surface portion 112a.

The maximum height h of the aperture 107, i.e. the height of the entrance is set to be at least the wave length of the laser so that the laser beam 6 may come into the aperture 107, and be not in excess of a value where the aperture 107 may be filled sufficiently with the molten metal created around the aperture 107. The height is usually not in excess of 80 % of the diameter D of the focal plane of the laser beam 6, and preferably at least three times of the wave length of the laser and is not in excess of 60 % of the diameter D. Where a CO₂ laser is employed, the maximum height h may be 0.01 to 0.20 mm, more preferably 0.03 to 0.15 mm.

The depth L of the aperture 107 may be preferably approximately 0.3 to 4 times of the diameter D, so that the laser beam 6 may render multiple reflections effectively. Where a CO₂ laser is employed, the depth L is usually 0.1 to 0.6 mm, more preferably 0.15 to 0.5 mm.

The optimum values of the maximum height h and the depth L of the aperture 107 are dependent on the type of the metal sheet, sheet thickness, welding velocity, the wave length, the output and the focal plane diameter of the laser, the distribution of energy on the focal plane of the laser beam 6 or the like. Accordingly, the above values are determined experimentally based on the aforementioned factors.

The welding of the overlap portion 110 is carried out in the following manner. The overlap portion 110 is conveyed transversally to the direction of the drawing when referring to Fig.13, and directed with the laser beam 6, while pressed by means of the pressing members 108 and 109 with an adequately slight force.

The laser beam 6 which has been directed to the cant plane 103 of the first member 101 and the surface 102a₁ of the second member 102 renders multiple reflections in the aperture 107, that is, reflects repeatedly between the upper surface, i.e. the cant plane 103 and the lower surface, i.e. the surface 102a₁ in the aperture 107, and thus melts the metals of the upper and lower surfaces of the aperture 107 to form molten metals. The metal at the vicinity of the cut edge 104 which has been directed with the laser beam 6 is also fused to form a molten metal.

Since the height h and the depth L of the aperture 107 are both tiny, the molten metals are integrated mainly by surface tension immediately after have passed the laser beam 6 and fill the aperture 107, to form a molten portion having a relatively smooth surface similar to the molten portion 7 shown in Fig. 2, and a weld not shown is formed after the molten portion 7 has been solidified.

Where the energy level of the laser beam 6 which has passed the aperture 107 and reached the contact portion 106 is high enough to melt all the contact portion 106, all the contact portion 106 is fused to form a molten portion, in the same manner as shown in Fig. 2. On the other hand, where the energy level of the laser beam 6 which has reached the contact portion 106 is low, the contact portion 106 is heated to at least about 1000° C owing to the temperature rise due to the laser beam irradiation and the heat conductance from the molten metal around the aperture 107. As a result, the solid contact portion 106 is pressure welded with the pressing members 108 and 109, to form a pressure welded portion not shown which is part of the weld.

Since the pressing force by the pressing members 108 and 109 is slight to the extent that the overlap portion 110 is not mashed during welding, there is no risk that the molten metal is mashed and thus extruded or splashed. With the same output of the laser beam 6, the energy level of the laser beam which reaches the contact portion 106, is the less, the welding velocity is the higher. Accordingly, so as to weld the total width of the contact portion 106, it is preferable that the width of the contact portion 106 is as short as possible, so far as the overlap portion 110 is formed satisfactorily.

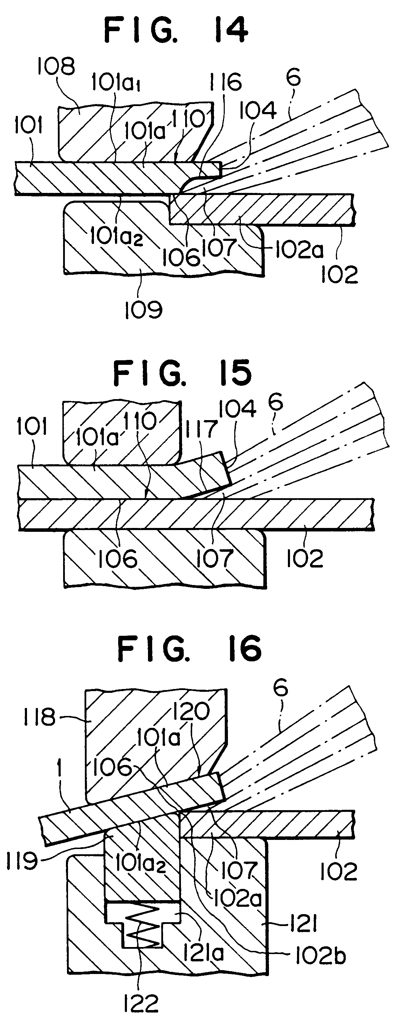

As indicated in Fig. 14, the aperture 107 of the overlap portion 110 may be of the type having a concave face 116 of a semiU-shaped section which extends from the lower surface 101a₂ toward the cut edge 104 of the first member 101, in place of the cant plane 103 in Fig.13. As shown in Fig.15, the overlap portion 110 may be formed by overlapping the first member 101 whose portion close to the cut edge 104 has been bended to form an inclined or cant plane 117, over the second member 102 to form the aperture 107. In the description the inclined plane 117 above-described is defined as a plane extending toward the cut edge.

The overlap portion 120 having a linear contact portion 106 and an aperture 107 shown in Fig. 16 is formed by bringing the lower surface 101a₂ of the edge portion 101a of the first member 101 which is clamped obliquely with an upper pressing member 118 and a backup member 119, into contact with the upper corner 102b of the edge portion 102a of a second member 102 which is held horizontally on a lower pressing member 121. A weld not shown can be formed by directing the laser beam 6 as shown in Fig. 16. The backup member 119 biased with a spring 122 is adapted to be slidable along a hole 121a provided in the lower pressing member 121.

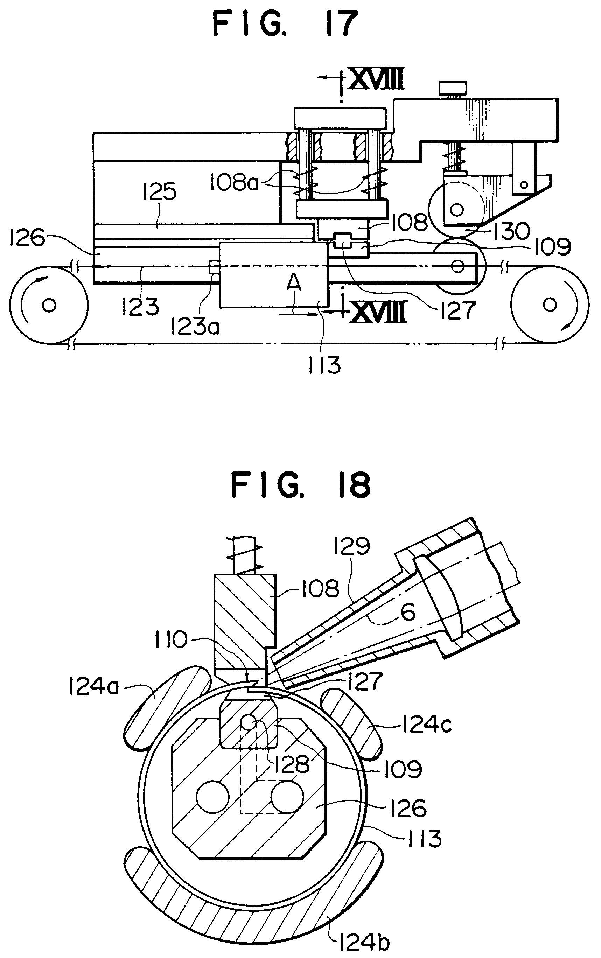

A welded can body may be manufactured from a tubular can body preform 113 having the overlap portion 110 with the apparatus indicated in Figs. 17, 18 in the following manner.

The apparatus is provided with a pair of endless chain conveyors 123 for conveying the preform 113 pushed with fingers 123a in the direction shown by arrow A, a Z-shaped edge guide bar 125 for forming the overlap portion 110 by allowing the outer edge portion corresponding to the edge portion 101a in Fig. 14 and the inner edge portion corresponding to the edge portion 102a in Fig. 14 to be close to each other during traveling in cooperation with pushing bars 124a, 124b and 124c (refer to Fig. 18; omitted in Fig.17), a support means 126 for supporting the Z-shaped guide bar 125 and a lower pressing member 109 or the like, an upper pressing member 108 which is biased with a spring 108a, the lower pressing member 109, and a pair of mashing rolls 130 arranged downstream the support means 126.

A beam hole 127 through which the laser beam 6 passes is provided between the upper pressing member 108 and the lower pressing member 109. The support means 126 and the lower pressing member 109 are provided with cooling water circulating holes 128. A laser beam gun 129 is arranged opposite to the beam hole 127 such that the laser beam 6 may be directed to the overlap portion 110 with a predetermined angle (refer to Fig. 18).

The tubular can body preform 113 is formed by rolling up a metal blank such that the edge portions 101a and 102a thereof may be opposite to each other, and is conveyed by the chain conveyors 123 at a high velocity in the direction shown by arrow A.

After the edge portions 101a and 102a have come close to each other while passing the Z-shaped guide bar 125, the overlap portion 110 having the contact portion 106 and the aperture 107 is formed by means of the upper pressing member 108 and the lower pressing member 109.

While traveling opposite to the beam hole 127, the overlap portion 110 is directed with the laser beam 6 (refer to Fig. 18) to form a molten portion not shown. The molten portion is solidified to form a weld, before it will reach the mashing rolls 130. The weld is mashed by means of the mashing rolls 130 to form a similar weld without step portions as shown in Fig. 3. In this manner the tubular can body preform 113 is made into a welded can body not shown.

A practical example in the above case will be described in the following. The tubular can body preform 113 of an inner diameter 65.3 mm was formed by rolling up a tinfree steel blank 0.12 mm thick which was formed with the concave face 116 (refer to Fig. 14) along the edge portion 101a.

While the preform 113 is conveyed at a velocity of 50 m/min with the chain conveyors 123, the overlap portion 110 having the aperture 107 where the maximum height h is 0.06 mm, the depth L is 0.2 mm and the width of the contact portion 106 is 0.05 mm was formed.

A CO₂ laser beam 6 having the focal plane diameter D of 0.2 mm and the output of 1.2 kw which beam was focussed with a lens having the focal length of 95.3 mm, was directed to the overlap portion 110 with the angle ϑ of 25 degrees to form a weld. The weld was mashed with the mashing rolls 130 having the diameter of 40 mm under the force of 40 kgf, and a welded can body having a weld without step portions was manufactured. The weld of the welded can body was formed along all the area of the overlap portion, and had an acceptable welding strength.

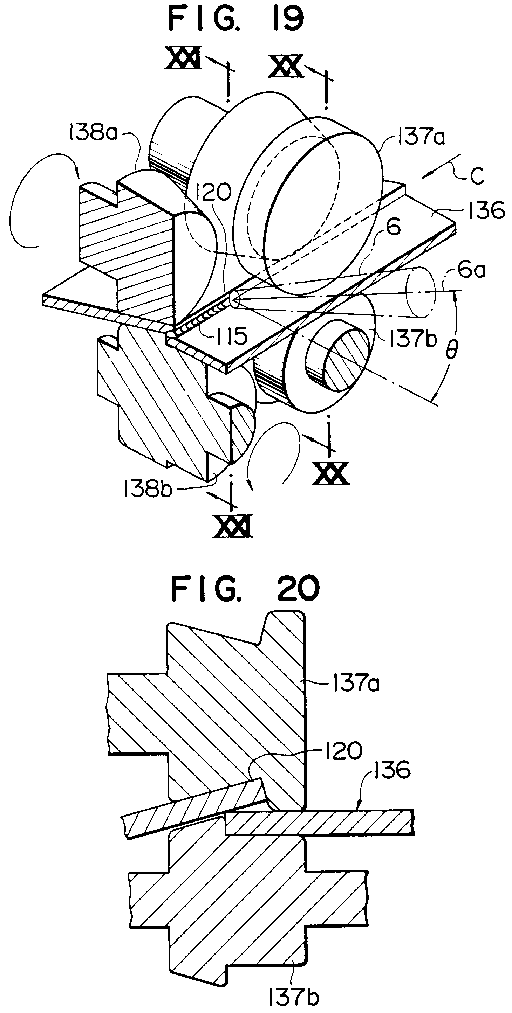

Fig. 19 illustrates another practical example for making a welded can body. A tubular body preform 136 formed by rolling up a metal blank with a roll former not shown provided at the right side of the drawing is conveyed in the direction shown by arrow C. While traveling, the overlap portion 120 of the type shown in Fig. 16 is formed with a pair of pressing rolls 137a and 137b (refer to Fig. 20) and a pair of pressing rolls 138a and 138b arranged downstream the rolls 137a, 137b.

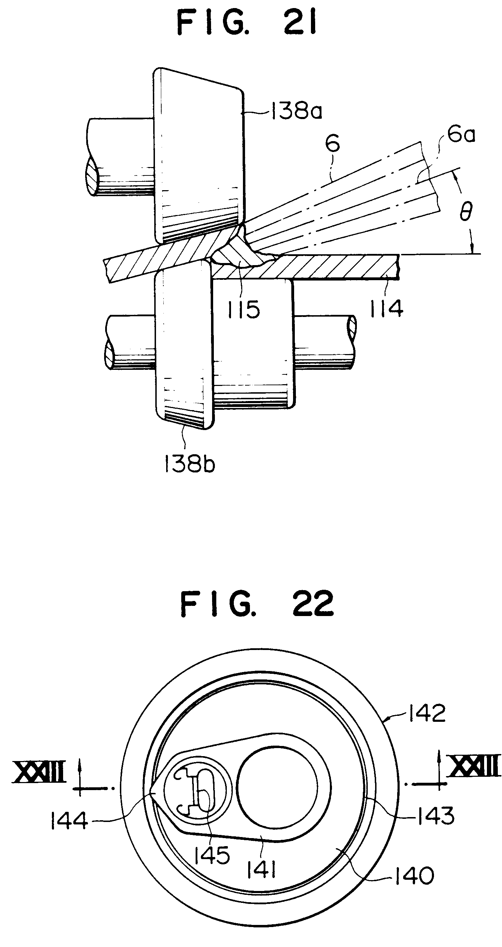

The laser beam 6 having a predetermined angle ϑ is directed to the overlap portion 120 at a point between the rolls 137a, 137b and the rolls 138a, 138b, as indicated in Fig. 21, to form a weld 115 of a welded can body 114. In this case also it is preferable to mash the weld 115 with mashing rolls not shown arranged downstream the pressing rolls 138a, 138b so that step portions may disappear substantially.

Fig. 22 illustrates an easy open can end 142 formed by welding an opening tab 141 to an end 140, wherein reference numerals 143, 144 and 145 indicate an annular score, a nose portion for initial opening and a weld, respectively.

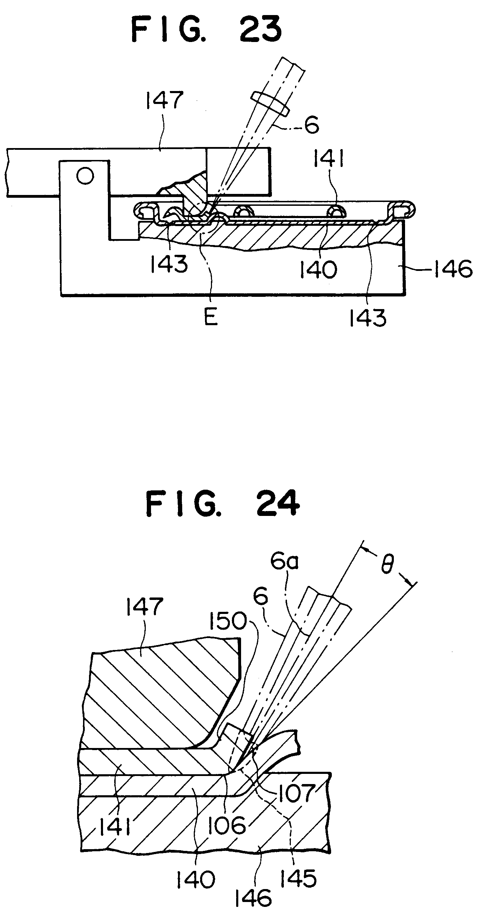

The welding is carried out in the following manner. As shown in Fig. 23, the end 140 is mounted on an anvil 146, and the opening tab 141 is set on a predetermined position of the end 140 with a pressing member 147. As shown in Fig. 24, an overlap portion 150 including a contact portion 106 and an aperture 107 having a V-like section is formed at the portion to be the weld 145. The overlap portion 150 is formed into the weld 145 by directing the laser beam 6 to the overlap portion 150 with a predetermined angle ϑ, as shown in Fig. 24, while the anvil 146 is moved transversally to the direction of the drawing.

The end 140 may be formed from a surface treated steel sheet or an aluminum alloy sheet or the like. Where the end 140 is formed from a surface treated steel sheet, the tab 141 is usually made from a surface treated steel sheet or a stainless steel sheet. Since the end 140 is usually coated with an organic film not shown such as a vanish film, it is preferable that the portion to be directed with the laser beam 6 is removed the organic film to expose the substrate metal prior to welding, and coated with the organic film after welded.

The temperature rise at the inner or lower side of the end 140 is little, and particularly when the anvil is cooled, the above temperature rise is extremely little, since the welding is carried out along the interface between the end 140 and the tab 141. Further, since the pressing force with the pressing member 147 is slight, the organic film on the inner side of the end 140 is hardly damaged.

The embodiments described and illustrated have been given by way of example only and it should be understood that the scope of the invention extends to those variations which will appear to those skilled in the art to which the invention relates.

For instance, the concave face (116) may be of any appropriate configuration, so far as the aperture does not include an extremely narrow portion toward the entrance. The cant plane (103) or the concave face (116) may extend such that it crosses the upper surface (101a₁) of the first member (refer to Figs. 13 and 14). In this case the portion corresponding to the cut edge is a cross line. In the description the cut edge is defined as a portion including the cross line.

## Claims

1. A laser beam welding method wherein an overlap portion (2) is formed by overlapping a first edge portion (3) over a second edge portion (4) such that a gap portion (5) is formed therebetween, and a laser beam (6) is directed to enter the gap portion (5) and form a weld; wherein the gap portion (5) extends in the longitudinal direction of the overlap portion (2) and is of tiny clearance, the axis (6a) of the laser beam is inclined by 10 to 60 degrees with respect to a surface portion (4a) of the second edge portion (4) in the overlap portion (2), the first and second edge portions defining the gap portion (5) are retained in position throughout formation of the weld, and the laser beam (6) is directed to be focused inside the overlap portion (2), onto a surface portion (4b) of the second edge portion (4) situated in the vicinity of the entrance to the gap portion (5), and onto a cut edge (3c) of the first edge portion (3), whereby the laser beam enters the gap portion (5), and melts the metal around the gap portion (5).

2. A laser beam welding method as claimed in Claim 1 wherein the gap portion (5) extends uniformly and continuously in the longitudinal direction.

3. A laser beam welding method as claimed in Claim 1 wherein the gap portion (5) extends unevenly and continuously in the longitudinal direction.

4. A laser beam welding method as claimed in Claim 1 wherein a plurality of gap portions (5) are formed close to each other but discontinuously in the longitudinal direction.

5. A laser beam welding method as claimed in Claim 1 wherein a welded tubular body (9) is made by forming the weld by directing the laser beam (6) to enter the overlap portion (2) of a tubular body preform (1) formed by overlapping the first edge portion and the second edge portion of a metal blank.

6. A laser beam welding method claimed in Claim 1 wherein the weld is mashed after solidification.

7. A laser beam welding method wherein an overlap portion (110) is formed by overlapping a first edge portion (101a) of a first member (101) over a second edge portion (102a) of a second member (102) such that an aperture (107) is formed therebetween, and a laser beam (6) is directed to enter the aperture (107) and form a weld; wherein the first edge portion (101a) is formed with a cant plane (103) or a concave face (116) extending towards a cut edge (104) thereof, the overlap portion (110) has a contact portion (106), the aperture (107) is tiny and is open from the contact portion (106) towards the cut edge (104) and extends in the longitudinal direction of the overlap portion, the axis (6a) of the laser beam (6) is inclined by 10 to 60 degrees with respect to a surface portion (102a₁) of the second member (102) in the overlap portion (110), and while slight pressure is applied to the contact portion (106), the laser beam (6) is directed to be focused to the entrance, or to the vicinity thereof, of the aperture (107), onto a surface portion (102a₁) of the second edge portion (102a) situated in the vicinity of the entrance to the aperture (107), and onto a cut edge (104) of the first edge portion (101), whereby the laser beam enters in the aperture (107), and melts the metal around the aperture (107).

8. A laser beam welding method wherein an overlap portion (120) is formed by overlapping a first edge portion (101a) of a first member (101) over a second edge portion (102a) of a second edge member (102) such that an aperture (107) is formed therebetween, and a laser beam (6) is directed to enter the aperture (107) and form a weld, wherein the overlap portion (120) is formed by bringing the first edge portion (101a), which is inclined with respect to the second edge portion (102a), into contact with a corner (102b) of the cut edge of the second portion (102) such that the overlap portion (120) has a linear contact portion (106) and a tiny aperture (107) open from the linear contact portion (106) towards the cut edge of the first edge portion (101), the axis (6a) of the laser beam (6) is inclined by 10 to 60 degrees with respect to a surface portion (102a₁) of the second member (102) in the overlap portion (120), the first and second edge portions defining the aperture (107) are retained in position throughout formation of the weld, and the laser beam (6) is directed onto a surface portion (102a₁) of the second edge portion (102a) situated in the vicinity of the entrance to the aperture (107), and onto a cut edge of the first edge portion (101a), whereby the laser beam (6) enters the aperture (107), and melts the metal around the aperture (107).

9. A laser beam welding method claimed in Claim 7 or 8 wherein the first member and the second member are a first edge portion and a second edge portion of the same metal blank, respectively, and a welded tubular body is made by forming the weld by directing the laser beam (6) to the overlap portion which has been formed by the opposed edge portions of a tubular body preform (113, 136) formed by rolling up the blank.

10. A laser beam welding method claimed in Claim 9 wherein the weld is mashed after solidification.

## Patentansprüche

1. Ein Laserstrahlschweißverfahren, bei dem ein Überlappbereich (2) durch Überlappen eines zweiten Randbereichs (4) mit einem ersten Randbereich (3) gebildet wird, so daß ein Spaltbereich (5) dazwischen entsteht, und bei dem ein Laserstrahl (6) so gerichtet wird, daß er in den Spaltbereich (5) eindringt, um eine Schweißung zu bewirken; bei dem sich der Spaltbereich (5) in der Längsrichtung des Überlappbereichs (2) erstreckt und einen winzigen Abstand aufweist, die Achse (6a) des Laserstrahls im Verhältnis zu einem Oberflächenbereichs (4a) des zweiten Randbereichs (4) in dem Überlappbereich (2) um 10 bis 60 Grad geneigt ist, die den Spaltbereich (5) abgrenzenden Randbereiche und zwar eines ersten und eines zweiten Randbereichs während des gesamten Schweißvorgangs in Position gehalten werden und der Laserstrahl (6) zwecks Fokussierung innerhalb des Überlappbereichs (2) auf einen Oberflächenbereich (4b) des zweiten in der Nähe des Eingangs des Spaltbereichs (5) gelegenen Randbereichs (4) und auf eine Schnittkante (3c) des ersten Randbereichs (3) zu gerichtet wird, wodurch der Laserstrahl in den Spaltbereich (5) eindringt und das den Spaltbereich (5) umgebende Metall schmilzt.

2. Ein Laserstrahlschweißverfahren nach Anspruch l, bei dem sich der Spaltbereich (5) gleichförmig und kontinuierlich in der Längsrichtung erstreckt.

3. Ein Laserstrahlschweißverfahren nach Anspruch 1, bei dem sich der Spaltbereich (5) ungleichmäßig und kontinuierlich in der Längsrichtung erstreckt.

4. Ein Laserstrahlschweißverfahren nach Anspruch 1, bei dem eine Mehrzahl von Spaltbereichen (5) knapp aneinander aber in der Längsrichtung diskontinuierlich gebildet wird.

5. Ein Laserstrahlschweißverfahren nach Anspruch 1, bei dem ein geschweißter rohrförmiger Körper (9) erzeugt wird, und zwar wird die Schweißung durch Richten des Laserstrahls (6) bewirkt, so daß dieser in den Überlappbereich (2) eines rohrförmigen Körpervorformlings (1) eindringt, der durch Überlappen des ersten Randbereichs und des zweiten Randbereichs eines unbearbeiteten Metallstücks gebildet wird.

6. Ein Laserstrahlschweißverfahren nach Anspruch 1, bei dem die Schweißung nach dem Erstarren gequetscht wird.

7. Ein Laserstrahlschweißverfahren, bei dem ein Überlappbereich (110) durch Überlappen eines zweiten Randbereichs (102a) eines zweiten Teils (102) mit einem ersten Randbereich (101a) eines ersten Teils (101) gebildet wird, so daß dazwischen eine Öffnung (107) entsteht, und bei dem ein Laserstrahl (6) so gerichtet wird, daß er in die Öffnung (107) eindringt und eine Schweißung bewirkt; bei dem der erste Randbereich (101a) mit einer schrägen Ebene (103) oder einer konkaven Fläche (116) gebildet wird, die sich auf eine Schnittkante (104) davon zu erstreckt, der Überlappbereich (110) einen Kontaktbereich (106) aufweist, die Öffnung (107) winzig und von dem Kontaktbereich (106) aus auf die Schnittkante (104) zu offen ist und sich in der Längsrichtung des Überlappbereichs erstreckt, die Achse (6a) des Laserstrahls (6) im Verhältnis zu einem Oberflächenbereich (102a₁) des zweiten Teils (102) in dem Überlappbereich (110) um 10 bis 60 Grad geneigt ist und der Laserstrahl unter Ausübung eines leichten Drucks auf den Kontaktbereich (106) so gerichtet wird, daß er auf den Eingang der Öffnung (107) oder deren Nähe, auf einen Oberflächenbereich (102a₁) des zweiten Randbereichs (102a), der in der Nähe des Eingangs der Öffnung (107) gelegen ist, und auf eine Schnittkante (104) des ersten Randbereichs (101) fokussiert wird, wodurch der Laserstrahl in die Öffnung (107) eindringt und das die Öffnung (107) umgebende Metall schmilzt.

8. Ein Laserstrahlschweißverfahren, bei dem ein Überlappbereich (120) durch Überlappen eines zweiten Randbereichs (102a) eines zweiten Randteils (102) mit einem ersten Randbereich (101a) eines ersten Teils (101) so gebildet wird, daß dazwischen eine Öffnung (107) entsteht, und bei dem ein Laserstrahl (6) so gerichtet wird, daß er in die Öffnung (107) eindringt und eine Schweißung bewirkt, bei dem der Überlappbereich (120) durch Inkontaktbringen des ersten Randbereichs (101a), der im Verhältnis zu dem zweiten Randbereich (102a) geneigt ist, mit einer Ecke (102b) der Schnittkante des zweiten Bereichs (102) gebildet wird, so daß der Überlappbereich (120) einen linearen Kontaktbereich (106) sowie eine winzige Öffnung (107) aufweist, die von dem linearen Kontaktbereich (106) aus auf die Schnittkante des ersten Randbereichs (101) zu offen ist, die Achse (6a) des Laserstrahls (6) im Verhältnis zu einem Oberflächenbereich (102a₁) des zweiten Teils (102) in dem Überlappbereich (120) um 10 bis 60 Grad geneigt ist, die die Öffnung (107) abgrenzenden Randbereiche und zwar eines ersten und eines zweiten Randbereichs während des gesamten Schweißvorgangs in Position gehalten werden und der Laserstrahl (6) auf einen Oberflächenbereich (102a₁) des zweiten Randbereichs (102a), der in der Nähe des Eingangs der Öffnung (107) gelegen ist, sowie auf eine Schnittkante des ersten Randbereichs (101a) zu gerichtet wird, wodurch der Laserstrahl (6) in die Öffnung (107) eindringt und das die Öffnung (107) umgebende Metallstück schmilzt.

9. Ein Laserstrahlschweißverfahren nach Anspruch 7 oder 8, bei dem der erste Teil und der zweite Teil einen ersten Randbereich bzw. einen zweiten Randbereich des gleichen unbearbeiteten Metallstücks bilden und ein geschweißter rohrförmiger Körper dadurch hergestellt wird, daß die Schweißung durch Richten des Laserstrahls (6) auf den Überlappbereich gebildet wird, der durch die gegenüberliegenden Randbereiche eines durch Aufrollen des unbearbeiteten Stücks gebildeten rohrförmigen Körpervorformlings (113, 136) hergestellt wurde.

10. Ein Laserstrahlschweißverfahren nach Anspruch 9, bei dem die Schweißung nach dem Erstarren gequetscht wird.

## Revendications

1. Procédé de soudage au rayon laser dans lequel une partie en recouvrement (2) est formée en faisant recouvrir par une première partie de bord (3) une deuxième partie de bord (4) de telle manière qu'un espace (5) soit formé entre elles, et dans lequel un rayon laser (6) est dirigé pour pénétrer dans l'espace (5) et former une soudure ; dans lequel l'espace (5) s'étend dans la direction longitudinale de la partie en recouvrement (2) et présente un jeu minuscule, l'axe (6a) du rayon laser est incliné de 10 à 60 degrés par rapport à une partie de surface (4a) de la deuxième partie de bord (4) dans la partie en recouvrement (2), les première et deuxième parties de bord définissant l'espace (5) sont retenues en position pendant toute la formation de la soudure, et le rayon laser (6) est dirigé de manière à être concentré à l'intérieur de la partie en recouvrement (2), sur une partie de surface (4b) de la deuxième partie de bord (4) située à proximité de l'entrée de l'espace (5), et sur un bord coupé (3c) de la première partie de bord (3), de telle manière que le rayon laser entre dans l'espace (5) et fasse fondre le métal autour de l'espace (5).

2. Procédé de soudage au rayon laser selon la Revendication 1 dans lequel l'espace (5) s'étend uniformément et continue dans la direction longitudinale.

3. Procédé de soudage au rayon laser selon la Revendication 1 dans lequel l'espace (5) s'étend de manière irrégulière et continue dans la direction longitudinale.

4. Procédé de soudage au rayon laser selon la Revendication 1 dans lequel une pluralité d'espaces (5) sont formés à proximité les uns des autres mais de manière discontinue dans la direction longitudinale.

5. Procédé de soudage au rayon laser selon la Revendication 1 dans lequel un corps tubulaire soudé (9) est réalisé en formant la soudure en dirigeant le rayon laser (6) de manière à ce qu'il entre dans la partie en recouvrement (2) de la préforme (1) de corps tubulaire formée en faisant recouvrir la première partie de bord et la deuxième partie de bord d'un flan de métal.

6. Procédé de soudage au rayon laser selon la Revendication 1 dans lequel la soudure est écrasée après solidification.

7. Procédé de soudage au rayon laser dans lequel une partie en recouvrement (110) est formée en faisant recouvrir par une première partie de bord (101a) d'un premier élément (101) une deuxième partie de bord (102a) d'un deuxième élément (102) de telle manière qu'une ouverture (107) soit formée entre elles, et dans lequel un rayon laser (6) est dirigé pour entrer dans l'ouverture (107) et former une soudure ; dans lequel la première partie de bord (101a) est formée avec un plan incliné (103) ou une face concave (116) s'étendant vers un bord coupé (104) de ladite partie, la partie en recouvrement (110) a une partie de contact (106), l'ouverture (107) est minuscule et est ouverte à partir de la partie de contact (106) vers le bord coupé (104) et s'étend dans la direction longitudinale de la partie en recouvrement, l'axe (6a) du rayon laser (6) est incliné de 10 à 60 degrés par rapport à une partie de surface (102a₁) du deuxième élément (102) dans la partie en recouvrement (110), et lorsqu'une légère pression est appliquée à la partie de contact (106), le rayon laser (6) est dirigé pour être concentré sur l'entrée, ou à proximité de celle-ci, de l'ouverture (107), sur une partie de surface (102a₁) de la deuxième partie de bord (102a) située à proximité de l'entrée de l'ouverture (107), et sur un bord coupé (104) de la première partie de bord (101), de telle manière que le rayon laser pénètre dans l'ouverture (107) et fasse fondre le métal autour de l'ouverture (107).

8. Procédé de soudage au rayon laser dans lequel une partie en recouvrement (120) est formée en faisant recouvrir par une première partie de bord (101a) d'un premier élément (101) une deuxième partie de bord (102a) d'un deuxième élément (102) de telle manière qu'une ouverture (107) soit formée entre elles, et dans lequel un rayon laser (6) est dirigé pour entrer dans l'ouverture (107) et former une soudure, dans lequel la partie en recouvrement (120) est formée en amenant la première partie de bord (101a), qui est inclinée par rapport à la deuxième partie de bord (102a), en contact avec un angle (102b) du bord coupé de la deuxième partie (102) de telle manière que la partie en recouvrement (120) ait une partie en contact linéaire (106) et une ouverture minuscule (107) ouverte de la partie en contact linéaire (106) vers le bord coupé de la première partie de bord (101), l'axe (6a) du rayon laser (6) est incliné de 10 à 60 degrés par rapport à une partie de surface (102a₁) du deuxième élément (102) dans la partie en recouvrement (120), les première et deuxième parties de bord définissant l'ouverture (107) sont retenues en position pendant toute la formation de la soudure, et le rayon laser (6) est dirigé sur une partie de surface (102a₁) de la deuxième partie de bord (102a) située à proximité de l'entrée de l'ouverture (107), et sur un bord coupé de la première partie de bord (101a), de telle manière que le rayon laser (6) entre dans l'ouverture (107) et fasse fondre le métal autour de l'ouverture (107).

9. Procédé de soudage au rayon laser selon la Revendication 7 ou 8 dans lequel le premier élément et le deuxième élément sont une première partie de bord et une deuxième partie de bord du même flan de métal, respectivement, et un corps tubulaire soudé est réalisé en formant la soudure en dirigeant le rayon laser (6) vers la partie en recouvrement qui a été formée par les parties de bords opposées d'une préforme de corps tubulaire (113, 136) formée en enroulant le flan.

10. Procédé de soudage au rayon laser selon la Revendication 9 dans lequel la soudure est écrasée après solidification.
